Europäisches Patentamt

European Patent Office

Office européen des brevets

(11) Veröffentlichungsnummer: **0 317 869**
**A1**

## (12) EUROPÄISCHE PATENTANMELDUNG

(21) Anmeldenummer: 88118981.5

(22) Anmeldetag: 14.11.88

(51) Int. Cl.⁴: **H02P 7/62**

(30) Priorität: 25.11.87 DE 3739971

(43) Veröffentlichungstag der Anmeldung:
31.05.89 Patentblatt 89/22

(84) Benannte Vertragsstaaten:
**AT DE SE**

(71) Anmelder: **Siemens Aktiengesellschaft Berlin und München**
**Wittelsbacherplatz 2**
**D-8000 München 2(DE)**

(72) Erfinder: **Heinle, Georg, Dipl.-Ing.**
**Moorbachweg 14**
**D-8520 Erlangen(DE)**

(54) **Verfahren zur Nachbildung des Lastwinkelistwertes einer Drehfeldmaschine und Schaltungsanordnung zur Durchführung des Verfahrens.**

(57) Die Erfindung bezieht sich auf ein Verfahren zur Nachbildung des Lastwinkelistwertes ($\gamma$) einer Drehfeldmaschine aus den Klemmenspannungen ($u_R$, $u_S$) und Leiterströmen ($i_R$, $i_S$) mindestens zweier Phasen (R, S) des Stators der Drehfeldmaschine, die jeweils ständerorientierte Wechselgrößen darstellen, wobei diese ständerorientierten Wechselgrößen ($u_R$, $u_S$, $i_R$, $i_S$) in eine erste Ständerstromkomponente ($i_1$) und eine zweite Ständerstromkomponente ($i_2$) des Maschinenstromvektors ($i^s$) und einen Betrag des Maschinenflußvektors ($|\phi^s|$) transformiert werden, die jeweils feldorientierte Gleichgrößen sind. Erfindungsgemäß wird eine korrigierte, aus einer stationären Komponente ($i_{1s}$) und einer dynamischen Komponente ($i_{1d}$) bestehende, erste Ständerstromkomponente ($\overline{i_1}$) erzeugt, wobei die stationäre Komponente ($i_{1s}$) aus dem Betrag des Maschinenflußvektors ($|\phi^s|$) dividiert durch den Wert der Maschinenhauptinduktivität ($L_H$) ermittelt wird und die dynamische Komponente ($i_{1d}$) gleich dem hochfrequenten Anteil der ersten Ständerstromkomponenten ($i_1$) ist und der Lastwinkelistwert ($\gamma$) aus der Beziehung $\gamma = \arctan i_2/\overline{i_1}$ abgeleitet wird. Somit kann der Lastwinkelistwert ($\gamma$) über den gesamten Regelbereich der Drehfeldmaschine fehlerfrei nachgebildet werden.

FIG 3

## Verfahren zur Nachbildung des Lastwinkelistwertes einer Drehfeldmaschine und Schaltungsanordnung zur Durchführung des Verfahrens

Die Erfindung bezieht sich auf ein Verfahren zur Nachbildung des Lastwinkelistwertes einer Drehfeldmaschine aus den Klemmenspannungen und Leiterströmen mindestens zweier Phasen des Stators der Drehfeldmaschine, die jeweils ständerorientierte Wechselgrößen darstellen, wobei diese ständerorientierten Wechselgrößen in eine erste Ständerstromkomponente und eine zweite Ständerstromkomponente des Maschinenstromvektors und einen Betrag des Maschinenflußvektors transformiert werden, die jeweils feldorientierte Gleichgrößen sind, wobei die erste Ständerstromkomponente in Richtung des Maschinenflußvektors liegt und die zweite Ständerstromkomponente senkrecht auf dem Maschinenflußvektor steht.

Im Handel sind feldorientierte Regelungen für Drehfeldmaschinen erhältlich, wodurch die stromrichtergespeiste Drehfeldmaschine mit der feldorientierten Regelung Eigenschaften erhält, die denen eines Gleichstromantriebes sowohl in statischer als auch in dynamischer Hinsicht gleichwertig sind. Ein solcher Antrieb, drehzahl- oder momentengeregelt, ermöglicht einen Vierquadrantenbetrieb, wobei die Maschine auch bei Stillstand mit Nennmoment dauernd belastet werden kann.

Das Prinzip der Feldorientierung beruht darauf, daß die als Wechselgrößen (ständerorientierte Größen) gemessenen Größen Klemmenspannung und Leiterstrom durch eine feldorientierte Koordinatentransformation in Gleichgrößen derart umgeformt werden, daß eine getrennte Regelung von Magnetisierungsstrom ($i_1$-Regelung) und Wirkstrom ($i_2$-Regelung) möglich ist. Der $i_1$-Regelung kann eine Flußregelung und der $i_2$-Regelung eine Drehzahlregelung überlagert werden. Die erzeugten feldorientierten Stellgrößen werden durch eine ständerorientierte Koordinatentransformation in ständerorientierte Stellgrößen umgewandelt und als Steuerspannungen dem Stromrichter zugeführt.

Aus der DE-AS 28 33 593 ist ein Verfahren zur Nachbildung des Maschinenflusses einer Drehfeldmaschine aus den Klemmenspannungen und Leiterströmen mindestens zweier Phasen des Stators der Drehfeldmaschine bekannt. Als Schaltungsanordnung zur Durchführung dieses Verfahrens ist eine Rechenschaltung vorgesehen, die aus den Klemmenspannungen und den Leiterströmen zweier Phasen der Drehfeldmaschine den Maschinenfluß nachbildet. Diese Rechenschaltung wird als Spannungsmodell der Drehfeldmaschine bezeichnet.

Außerdem ist ein Istwertrechner bekannt, der aus den Klemmenspannungen und den Leiterströmen mindestens zweier Phasen des Stators der Drehfeldmaschine feldorientierte Gleichgrößen, beispielsweise eine erste und zweite Ständerstromkomponente und den Betrag des Maschinenflußvektors, erzeugt. Dabei liegt die erste Ständerstromkomponente in Richtung des Maschinenflußvektors und die zweite Ständerstromkomponente steht senkrecht auf dem Maschinenflußvektor.

Zur Nachbildung des Lastwinkelistwertes sind nun aus den mittels des Istwertrechners erzeugten zweiten und ersten Ständerstromkomponente ein Quotient zu bilden, von dem man den arctan berechnet. Der Maschinenflußvektor, der mittels des Istwertrechners, dem das Spannungsmodell zugrundeliegt, aus den Klemmengrößen der Drehfeldmaschine nachgebildet wird, ist fehlerbehaftet, wobei sich der Fehler besonders im Phasenwinkel des Maschinenflußvektors bemerkbar macht. Da die erste Ständerstromkomponente in Richtung des Maschinenflußvektors liegt, wirkt sich dieser Fehler voll auf die erste Ständerstromkomponente aus. Somit ist die Nachbildung des Lastwinkelistwertes fehlerbehaftet.

Der Erfindung liegt nun die Aufgabe zugrunde, das eingangs genannte Verfahren zur Nachbildung des Lastwinkelistwertes einer Drehfeldmaschine dahingehend zu verbessern, daß die fehlerbehaftete erste Ständerstromkomponente des Istwertrechners korrigiert wird, wodurch die Berechnung des Lastwinkelistwertes annähernd fehlerfrei wird, und eine Schaltungsanordnung zur Durchführung des erfindungsgemäßen Verfahrens anzugeben.

Diese Aufgabe wird erfindungsgemäß dadurch gelöst, daß eine korrigierte, aus einer stationären Komponente und einer dynamischen Komponente bestehende, erste Ständerstromkomponente erzeugt wird, wobei die stationäre Komponente aus dem Betrag des Maschinenflußvektors dividiert durch den Wert der Maschinenhauptinduktivität ermittelt wird und die dynamische Komponente gleich dem hochfrequenten Anteil der ersten Ständerstromkomponenten ist und daß der Lastwinkelistwert aus der Beziehung

$$\gamma = \arctan i_2/\overline{i_1}$$

abgeleitet wird, wobei

$i_2$ = zweite Ständerstromkomponente

$\overline{i_1}$ = korrigierte erste Ständerstromkomponente ist.

Dadurch, daß die korrigierte erste Ständerstromkomponente aus zwei Komponenten, nämlich einer stationären und einer dynamischen Komponente, besteht, erhält man über den gesamten Regelbereich der Drehfeldmaschine eine sehr gute Nachbildung des Lastwinkelistwertes. Die stationäre Komponente der korrigierten ersten Ständerstromkomponente wird aus dem Betrag des Maschinenflußvektors dividiert durch den Wert der Maschinenhauptinduktivität ermittelt. Beide Teile dieses Quotienten werden annähernd fehlerfrei ermittelt, so daß für den stationären Fall der Lastwinkelistwert fehlerfrei nachgebildet werden kann. Im dynamischen Fall macht sich die dynamische Komponente, die gleich dem hochfrequenten Anteil der ersten fehlerbehafteten Ständerstromkomponente ist, bemerkbar, wodurch auch bei Änderungen der Belastung der Drehfeldmaschine immer der Lastwinkelistwert fehlerfrei ermittelt werden kann.

Bei einer vorteilhaften Schaltungsanordnung zur Durchführung des Verfahrens mit einem Istwertrechner, der die ständerorientierten Wechselgrößen in feldorientierte Gleichgrößen transformiert, ist die erste Ständerstromkomponente über ein Hochpaß, dessen Zeitkonstante annähernd gleich der Maschinenflußzeitkonstante der Drehfeldmaschine ist, einem ersten Eingang eines Summiergliedes zugeführt, dessen zweiter Eingang mit einem Ausgang eines Quotientenbildners verknüpft ist, dessen erster Eingang mit dem Betrag des Maschinenflußvektors und dessen zweiter Eingang mit dem Wert der Maschinenhauptinduktivität beaufschlagt sind, ist der Ausgang des Summiergliedes mit einem zweiten Eingang einer Verarbeitungsschaltung verknüpft, deren erster Eingang mit der zweiten Ständerstromkomponenten beaufschlagt ist, wobei die Verarbeitungsschaltung einen Quotientenbildner mit nachgeschaltetem Speicher enthält.

Mit dieser Schaltungsanordnung kann über den gesamten Drehzahlbereich der Drehfeldmaschine unabhängig von der Belastung der Lastwinkelistwert annähernd fehlerfrei nachgebildet werden. Durch die erfindungsgemäße Zusammensetzung der korrigierten ersten feldorientierten Ständerstromkomponente wird für den stationären bzw. dynamischen Betriebszustand der Drehfeldmaschine der Lastwinkelistwert annähernd fehlerfrei nachgebildet.

In einer besonders einfachen Schaltungsanordnung ist als Verarbeitungsschaltung ein Prozessor vorgesehen. Somit läßt sich der Lastwinkelistwert besonders einfach und schnell aus der zweiten feldorientierten Ständerstromkomponente und der korrigierten ersten feldorientierten Ständerstromkomponente berechnen.

Zur weiteren Erläuterung der Erfindung wird auf die Zeichnung Bezug genommen, in der ein Ausführungsbeispiel nach der Erfindung schematisch veranschaulicht ist. Dabei zeigen

FIG 1 ein Raumvektordiagramm,

FIG 2 eine bekannte Ausführungsform eines Istwertrechners, der ständerorientierte Wechselgrößen in feldorientierte Gleichgrößen transformiert und

FIG 3 eine Schaltungsanordnung zur Durchführung des erfindungsgemäßen Verfahrens.

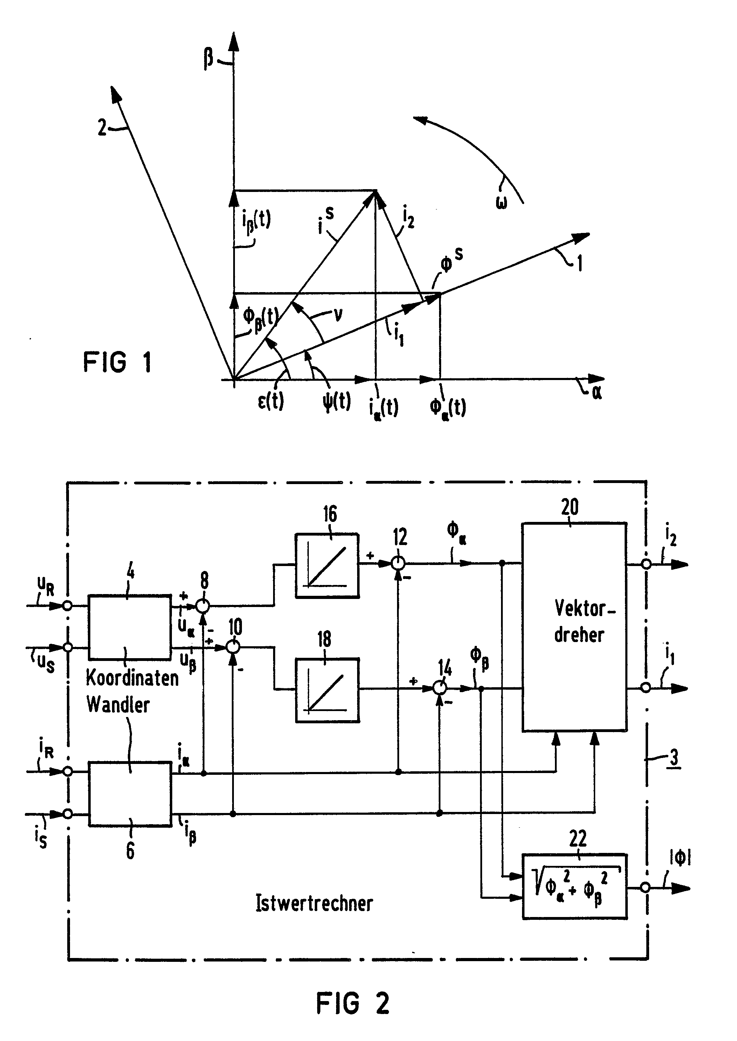

Die FIG 1 zeigt ein Raumvektordiagramm, in dem die Achsen des orthogonalen Ständerkoordinatensystems mit $\alpha$ und $\beta$ und die Achsen des orthogonalen Feldkoordinatensystems mit den Ziffern 1 und 2 bezeichnet sind. Aus zwei Phasenströmen $i_R$ und $i_S$ eines Drehstromsystems des Stators der Drehfeldmaschine wird ein Zweiphasensystem mit zwei senkrechten Strömen $i_\alpha$ und $i_\beta$ gebildet. Die Achsen des Zweiphasensystems, auch orthogonales Ständerkoordinatensystem genannt, sind so gelegt, daß eine Achse mit der Richtung des Phasenstromes $i_R$ zusammenfällt. Dadurch ist der Wert der $\alpha$-Stromkomponente $i_\alpha$ gleich dem Wert des Phasenstromes $i_R$ und der Wert der $\beta$-Stromkomponenten $i_\beta$ wird aus der Beziehung $2/\sqrt{3}$ $(1/2$ $i_R + i_S)$ abgeleitet. Aus diesen beiden orthogonalen Stromkomponenten $i_\alpha$ und $i_\beta$ ist ein Ständerstromvektor $i^s$ gebildet, der im Ständerkoordinatensystem $\alpha/\beta$ mit der $\alpha$-Achse einen Winkel $\epsilon$ (t) einschließt. Dieser Ständerstromvektor $i^s$ rotiert mit der Winkelgeschwindigkeit $\omega$ der Ständerdurchflutung, während $i_\alpha$ und $i_\beta$ mit der entsprechenden Frequenz oszillieren. Der Winkel $\epsilon$ (t), den der Vektor $i^s$ jeweils mit der $\alpha$-Achse zu einem bestimmten Zeitpunkt einschließt, verändert sich mit der Winkelgeschwindigkeit $\omega$ des umlaufenden Ständerstromvektors $i^s$. Außerdem ist im Raumvektor diagramm der Maschinenflußvektor $\phi^s$ dargestellt, der mit der $\alpha$-Achse einen Winkel $\psi$ (t) einschließt. Ihre Differenz $\epsilon(t) - \psi(t) = \gamma$ hingegen ist zeitlich konstant, falls sich die Belastungsverhältnisse der Maschine nicht ändern. Die Komponenten $\phi_\alpha$ und $\phi_\beta$ des Maschinenflußvektors $\phi^s$ sind mit einem Istwertrechner 3, gemäß FIG 2, dem das sogenannte Spannungsmodell zugrundeliegt, aus den ständerorientierten Wechselgrößen - Klemmenspannung $u_R$, Klemmenspannung $u_S$, Leiterstrom $i_R$, Leiterstrom $i_S$ - ermittelt. Dabei ist der Betrag des Maschinenflußvektors $|\phi^s|$ annähernd fehlerfrei, jedoch der Winkel $\psi$ (t) fehlerbehaftet. Durch die Lage des Maschinenflußvektors $\phi^s$ ist ein Feldkoordinatensystem mit den Achsen 1 und 2 festgelegt, wobei der Maschinenflußvektor $\phi^s$ in Richtung der Achse 1 liegt. Der Ständerstromvektor $i^s$ setzt sich im Feldkoordinatensystem 1, 2 aus einer ersten Ständerstromkomponente $i_1$ und einer zweiten Ständerstromkomponente $i_2$ zusammen, die jeweils Gleichgrößen sind. Dabei ist die erste feldorientierte Ständerstromkomponente $i_1$ in Richtung des Maschinenflußvektors $\phi^s$ und die zweite

feldorientierte Ständerstromkomponente $i_2$ steht senkrecht auf dem Maschinenflußvektor $\phi^s$. Da der Winkel $\psi$ (t) des Maschinenflußvektors $\phi^s$ fehlerbehaftet ist, wirkt sich dieser Fehler bei starker Belastung der Drehfeldmaschine, insbesondere bei Nennmoment, in der ersten Ständerstromkomponente $i_1$ fort. Diese Transformation der ständerorientierten Wechselgrößen $\phi_\alpha$, $\phi_\beta$, $i_\alpha$ und $i_\beta$ in feldorientierte Gleichgrößen $i_1$ und $i_2$ ermöglicht ein Vektordreher, der nach FIG 2 eine Baugruppe des Istwertrechners 3 ist.

Die FIG 2 veranschaulicht einen bekannten Istwertrechner 3, der die ständerorientierten Wechselgrößen $u_R$, $u_S$, $i_R$ und $i_S$ in feldorientierte Gleichgrößen $i_1$, $i_2$ und $|\phi^s|$ transformiert. Dabei enthält dieser Istwertrechner 3 zwei Koordinatenwandler 4 und 6, vier Summierglieder 8, 10, 12 und 14, zwei Integrierer 16 und 18, einen Vektordreher 20 und einen Betragsbildner 22.

Der Koordinatenwandler 4 bzw. 6 transformiert die Klemmenspannung $u_R$ und $u_S$ bzw. die Leiterströme $i_R$ und $i_S$ eines Drehstromsystems in ein Zweiphasensystem mit zwei senkrechten Spannungen $u_\alpha$ und $u_\beta$ bzw. Strömen $i_\alpha$ und $i_\beta$ des Ständerkoordinatensystems $\alpha/\beta$. Von diesen ständerorientierten Spannungskomponenten $u_\alpha$ und $u_\beta$ werden stromproportinale ohmsche Spannungsabfälle abgezogen, wobei jeweils die Differenz aufintegriert wird. Am Ausgang des Integrierers 16 bzw. 18 erhält man ständerorientierte Flußkomponenten $\phi_\alpha$ bzw. $\phi_\beta$, von denen jeweils stromproportionale induktive Spannungsabfälle abgezogen werden. Diese ständerorientierten Wechselgrößen $\phi_\alpha$, $\phi_\beta$, $i_\alpha$ und $i_\beta$, werden mittels des Vektordrehers 20 in feldorientierte Gleichgrößen $i_1$ und $i_2$ transformiert. Außerdem wird aus den ständerorientierten Flußkomponenten $\phi_\alpha$ und $\phi_\beta$ mittels eines Betragsbildners 22 der Betrag des Maschinenflußvektors $|\phi^s|$ gebildet.

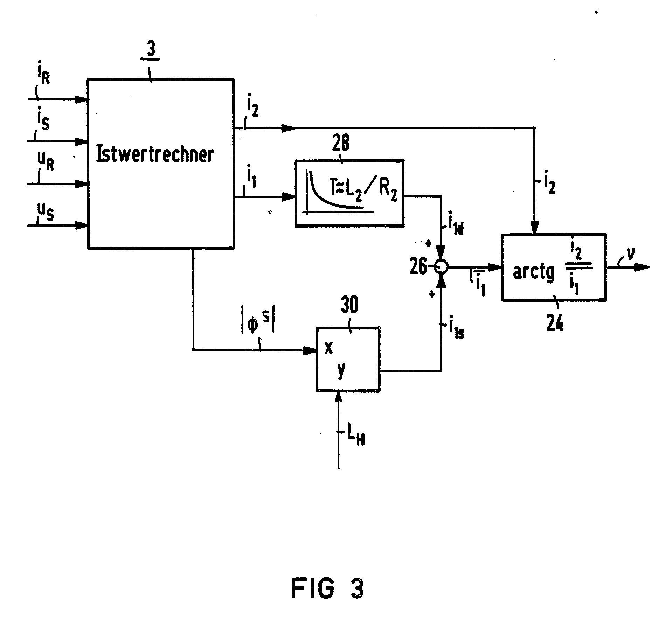

In FIG 3 ist eine Schaltungsanordnung zur Durchführung des erfindungsgemäßen Verfahrens dargestellt, wobei aus ständerorientierten Wechselgrößen $u_R$, $u_S$, $i_R$ und $i_S$ mittels des Istwertrechners 3 feldorientierte Gleichgrößen $i_1$, $i_2$ und $|\phi^s|$ gebildet werden. Die zweite Ständerstromkomponente $i_2$ ist direkt einem ersten Eingang einer Verarbeitungsschaltung 24 zugeführt. Der Aufbau einer derartigen Verarbeitungsschaltung 24 ist allgemein bekannt. Beispielsweise kann die Verarbeitungsschaltung 24 einen Quotientenbildner mit nachgeschaltetem Speicher enthalten. Im Speicher ist beispielsweise die Arcus-Tangens-Funktion mit einer vorbestimmten Auflösung hinterlegt. Als Adressen des Speichers sind jeweils der ermittelte Quotient aus der zweiten Ständerstromkomponente $i_2$ und der korrigierten ersten Ständerstromkomponente $\overline{i_1}$ vorgesehen. Eine besonders einfache Ausführungsform der Verarbeitungsschaltung 24 erhält man, wenn man als Verarbeitungsschaltung 24 einen Prozessor vorsieht. Einem zweiten Eingang dieser Verarbeitungsschaltung 24 ist die korrigierte erste Ständerstromkomponente $\overline{i_1}$ zugeführt, die am Ausgang eines Summiergliedes 26 ansteht. Der erste Eingang des Summiergliedes 26 ist über ein Hochpaß 28 mit dem Istwertrechner 3 verbunden. Die Zeitkonstante T dieses Hochpasses 28 ist annähernd gleich der Flußzeitkonstanten $L_2/R_2$ der Drehfeldmaschine. Dadurch gelangen nur die hochfrequenten Anteile der ersten fehlerhaften Ständerstromkomponente $i_1$ zum ersten Eingang des Summiergliedes 26. Der zweite Eingang des Summiergliedes 26 ist mit dem Ausgang eines Quotientenbildners 30 verknüpft, dessen erster Eingang x mit dem Betrag des Maschinenflußvektors $|\phi^s|$ und dessen zweiter Eingang y mit dem Wert der Maschinenhauptinduktivität $L_H$ beaufschlagt sind. Am Ausgang dieses Quotientenbildners 30 steht eine statische Stromkomponente $i_{1s}$ an, die äquivalent dem niederfrequenten Anteil der feldorientierten Ständerstromkomponente $i_1$ ist. Die korrigierte erste Ständerstromkomponente $\overline{i_1}$, die am Ausgang des Summiergliedes 26 bzw. am zweiten Eingang der Verarbeitungsschaltung 24 ansteht, enthält somit eine stationäre und dynamische Komponente $i_{1s}$ und $i_{1d}$. Bei einem stationären Betriebszustand des Antriebs, d.h. konstante Belastung einer Maschine, wirkt sich der dynamische Anteil $i_{1d}$ kaum aus. Jedoch bei Änderung der Belastung an der Maschine, d.h. im dynamischen Betriebszustand, ist der dynamische Anteil nicht mehr zu vernachlässigen. Diese Erkenntnis ist beim erfindungsgemäßen Verfahren berücksichtigt worden.

Somit kann man unabhängig vom Betriebszustand der Drehfeldmaschine immer den Lastwinkelistwert $\gamma$, der am Ausgang der Verarbeitungsschaltung 24 ansteht, und den Winkel zwischen dem Ständerstromvektor $i^s$ und dem Maschinenflußvektor $\phi^s$ angibt, mittels der Schaltungsanordnung zur Durchführung des erfindungsgemäßen Verfahrens aus den ständerorientierten Wechselgrößen $u_R$, $u_S$, $i_R$ und $i_S$ zweier Phasen R und S des Stators der Drehfeldmaschine nachbilden.

## Ansprüche

1. Verfahren zur Nachbildung des Lastwinkelistwertes ($\gamma$) einer Drehfeldmaschine aus den Klemmenspannungen ($u_R$, $u_S$) und Leiterströmen ($i_R$, $i_S$) mindestens zweier Phasen (R, S) des Stators der Drehfeldmaschine, die jeweils ständerorientierte Wechselgrößen darstellen, wobei diese ständerorientierten Wechselgrößen ($u_R$, $u_S$, $i_R$, $i_S$) in eine erste Ständerstromkomponente ($i_1$) und eine zweite Ständerstromkomponente ($i_2$) des Maschinenstrom-

vektors ($i^s$) und einen Betrag des Maschinenfluß-vektors ($|\phi^s|$) transformiert werden, die jeweils feldorientierte Gleichgrößen sind, wobei die erste Ständerstromkomponente ($i_1$) in Richtung des Maschinenflußvektors ($\phi^s$) liegt und die zweite Ständerstromkomponente ($i_2$) senkrecht auf dem Maschinenflußvektor ($\phi^s$) steht, **dadurch gekennzeichnet,** daß eine korrigierte, aus einer stationären Komponente ($i_{1s}$) und einer dynamischen Komponente ($i_{1d}$) bestehende, erste Ständerstromkomponente ($\overline{i_1}$) erzeugt wird, wobei die stationäre Komponente ($i_{1s}$) aus dem Betrag des Maschinenfluß-vektors ($|\phi^s|$) dividiert durch den Wert der Maschinenhauptinduktivität ($L_H$) ermittelt wird und die dynamische Komponente ($i_{1d}$) gleich dem hochfrequenten Anteil der ersten Ständerstromkomponenten ($i_1$) ist und daß der Lastwinkelistwert ($\gamma$) aus der Beziehung

$$\gamma = \arctan i_2 / \overline{i_1}$$

abgeleitet wird, wobei

$i_2$ = zweite Ständerstromkomponente

$\overline{i_1}$ = korrigierte erste Ständerstromkomponente ist.

2. Schaltungsanordnung zur Durchführung des Verfahrens nach Anspruch 1 mit einem Istwertrechner (3), der die ständerorientierten Wechselgrößen ($u_R$, $u_S$, $i_R$, $i_S$) in feldorientierte Gleichgrößen ($|\phi^s|$, $i_1$, $i_2$) transformiert, **dadurch gekennzeichnet,** daß die erste Ständerstromkomponente ($i_1$) über einen Hochpaß (28), dessen Zeitkonstante (T) annähernd gleich der Flußzeitkonstante ($L_2/R_2$) der Drehfeldmaschine ist, einem ersten Eingang eines Summiergliedes (26) zugeführt ist, dessen zweiter Eingang mit einem Ausgang eines Quotientenbildners (30) verknüpft ist, dessen erster Eingang (x) mit dem Betrag des Maschinenflußvektors ($\phi^s$) und dessen zweiter Eingang (y) mit dem Wert der Maschinenhauptinduktivität ($L_H$) beaufschlagt sind, daß der Ausgang des Summiergliedes (26) mit einem zweiten Eingang einer Verarbeitungsschaltung (24) verknüpft ist, deren erster Eingang mit der zweiten Ständerstromkomponenten ($i_2$) beaufschlagt ist, wobei die Verarbeitungsschaltung (24) einen Quotientenbildner mit nachgeschaltetem Speicher enthält.

3. Schaltungsanordnung nach Anspruch 2, **dadurch gekennzeichnet,** daß als Verarbeitungsschaltung (24) ein Prozessor vorgesehen ist.

FIG 1

FIG 2

FIG 3

| | Europäisches Patentamt | **EUROPÄISCHER RECHERCHENBERICHT** | Nummer der Anmeldung |
|---|---|---|---|
| | | | EP 88 11 8981 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 007 552  (SIEMENS AG)<br>--- | | H 02 P   7/62 |
| A | DE-A-3 026 348  (SIEMENS AG)<br>* Seiten 6,7 *<br>--- | 1,2 | |
| A | EP-A-0 071 847  (SIEMENS AG)<br>--- | | |
| A | DE-A-3 045 575  (LICENTIA PATENT-VERWALTUNGS-GmbH)<br>* Seiten 10-12 *<br>--- | | |
| A | EP-A-0 228 535  (SIEMENS AG)<br>----- | | |
| | | | **RECHERCHIERTE SACHGEBIETE (Int. Cl.4)**<br><br>H 02 P |

Der vorliegende Recherchenbericht wurde für alle Patentansprüche erstellt

| Recherchenort | Abschlußdatum der Recherche | Prüfer |
|---|---|---|
| DEN HAAG | 22-02-1989 | BEYER F. |